(19)

Europäisches Patentamt
European Patent Office
Office européen des brevets

(11)     **EP 1 665 103 B1**

(12)     **EUROPÄISCHE PATENTSCHRIFT**

(45) Veröffentlichungstag und Bekanntmachung des Hinweises auf die Patenterteilung:
**09.04.2008   Patentblatt 2008/15**

(21) Anmeldenummer: 03818484.2

(22) Anmeldetag: **11.09.2003**

(51) Int Cl.:
*G06F 17/50* [(2006.01)]     *G05B 19/4097* [(2006.01)]

(86) Internationale Anmeldenummer:
**PCT/CH2003/000613**

(87) Internationale Veröffentlichungsnummer:
**WO 2005/024671 (17.03.2005 Gazette 2005/11)**

(54) **BESTIMMUNG EINES MODELLS EINER GEOMETRIE EINER BLECH-UMFORMSTUFE**

DETERMINATION OF A MODEL OF A GEOMETRY OF A METAL SHEET FORMING STAGE

DETERMINATION D'UN MODELE GEOMETRIQUE D'UN STADE DE TRANSFORMATION DE TOLE

(84) Benannte Vertragsstaaten:
**DE FR**

(43) Veröffentlichungstag der Anmeldung:
**07.06.2006   Patentblatt 2006/23**

(73) Patentinhaber: **Autoform Engineering GmbH**
**8173 Neerach (CH)**

(72) Erfinder:
• **HILLMANN, Matthias**
**CH-8006 Zürich (CH)**
• **KUBLI, Waldemar**
**CH-8173 Neerach (CH)**

(74) Vertreter: **Frei Patent Attorneys**
**Frei Patentanwaltsbüro**
**Postfach 1771**
**8032 Zürich (CH)**

(56) Entgegenhaltungen:
**EP-A- 0 902 344         US-A- 5 980 085**
**US-A1- 2003 167 097**

• **LU S C ET AL: "INTEGRATION OF CAD AND FEA FOR CONCURRENT ENGINEERING DESIGN OF SHEET STAMPING" TRANSACTIONS OF THE AMERICAN SOCIETY OF MECHANICAL ENGINEERS, SERIES B: JOURNAL OF ENGINEERING FOR INDUSTRY, ASME. NEW YORK, US, Bd. 118, Nr. 3, 1. August 1996 (1996-08-01), Seiten 310-317, XP000622438 ISSN: 0022-0817**

**Beschreibung**

Die vorliegende Erfindung liegt im Bereich der Bestimmung und Optimierung von Bearbeitungsschritten bei der Herstellung von Blechumformteilen, beispielsweise mittels Tief-/Streckziehprozesse. Sie bezieht sich auf ein Verfahren, ein Datenverarbeitungssystem, ein Computerprogramm und einen Datenträger zur Bestimmung eines Modells einer Geometrie einer Umformstufe in einem Computer Aided Design (CAD)-System gemäss dem Oberbegriff der entsprechenden unabhängigen Patentansprüche.

In US 2004/0167097 A1 wird ein Verfahren zum automatischen Bestimmen einer Ankonstruktion zum Umformen einer Blechplatine zu einem Blechteil beschrieben. Die Ankonstruktion ist nicht Teil des fertigen Blechteiles, ist aber derart geformt, dass beim Umformen keine übermässige Belastung des Blechteiles selber stattfindet. Nebenbei wird auch das automatische Bestimmen der Platinenberandung beschrieben, welches den Materialverbrauch minimieren soll: Dabei wird vom Rand des Blechteiles nach dem Tiefziehen ausgegangen, und in einer inversen Einschrittsimulation (schnell aber ungenau) der entsprechende Rand vor dem Tiefziehen berechnet. Anschliessend wird durch eine inkrementelle Simulation (langsamer aber genau) wieder der resultierende Rand nach dem Tiefziehen berechnet. Anschliessend wird der Rand vor dem Tiefziehen solange geändert, und dabei jeweils die inkrementelle Simulation durchgeführt, bis der resultierende Rand nach dem Tiefziehen vorgegebenen Anforderungen genügt.

S.C. Lu et al: "Integration of CAD and FEA for Concurrent Engineering Design of Sheet Stamping". Trans. American Soc, Mech. Engr., Series B: Journal of Engineering for Industry, ASMA. New York, Band 118, Nr. 3, 1, August 1996, Seiten 310-317, beschreibt die Problematik der Integration von einerseits CAD-(Computer Aided Design) Modellen, wie sie im Entwurf von Bauteilen verwendet werden, und andererseits der FEA (Finite Element Analyse), wie sie zur Simulation von Umformprozessen verwendet wird, Es wird ein Softwaresystem beschrieben, welches CAD-Funktionalitäten mit FEM-Fuaktionalitäten integriert.

EP-A-0 902 334 betrifft die automatische Erzeugung von Steuerbefehlen für eine Blechbiegemaschine. Dazu wird, ausgehend von hinterlegten Daten über

- die Konfiguration einer gegebenen Biegemaschine,
- Steuerbefehle für diese Biegemaschine,
- die Geometrie von verfügbaren Biegewerkzeugen, und
- Information über das Biegeverhalten unterschiedlicher Materialien,

ausgegangen, und es wird anhand eines dreidimensionalen Modelles eine Folge von Biegeschritten bestimmt, welche zu einem gewünschten Zielprodukt führt.

US-A-5 980 085 zeigt die rechnerische Bestimmung einer Falzlinie in einer Planzeichnung für ein Biegeteil, wobei die Dehnung des gefalzten Materials berücksichtigt wird. Die Falzlinie wird so bestimmt, dass das Biegeteil nach dem Falzen vorgegebene Dimensionen aufweist. Dazu wird mehrmals, unter iterativem Anpassen der Falzlinie, eine Simulation des Falzprozesses mit Hilfe der FEA durchgeführt, bis die vorgegebenen Dimensionen nach dem Falzen vorliegen.

Blechumformteile werden in der Regel durch Tiefziehen hergestellt. Das Halbzeug, die sogenannten Blechplatinen (Platinen), werden zu diesem Zweck in mehrteilige Umformwerkzeuge gelegt. Mittels Pressen, in denen die Umformwerkzeuge eingespannt sind, werden die Teile geformt. Die Teile werden in der Regel über mehrere Umformstufen durch Bearbeitungsschritte wie Ziehen, Nachschlagen, Einstellen, etc., kombiniert mit Beschneidschritten, aus einer flachen Blechplatine hergestellt, Bei diesem Prozess stellen die Randbereiche, insbesondere die sogenannten Ankonstruktionen problematische Zonen dar: Bei der Auslegung der Werkzeuge für eine Umformstufe geht es u.a. darum, die entsprechend vorbereitete Bauteilgeometrie, bzw. bei mehrstufigen Prozessen eine Zwischengeometrie (beides im folgenden mit Bauteilgeometrie bezeichnet), in den Randzonen durch eine Ankonstruktion so zu ergänzen, dass daraus eine Werkzeuggeometrie entsteht, mit welcher die vorgegebene Bauteilgeometrie so gefertigt werden kann, dass kein Versagen (Risse und Falten) auftritt und dass andere Qualitätsanforderungen, zum Beispiel beschränkte Dickenabnahme, Erreichen einer Minimalstreckung des Bleches, und fertigungstechnische Restriktionen eingehalten werden.

Das Dimensionieren und Einstellen der Ankonstruktionen stellt heute eine grosse Problematik dar. Nicht selten vergehen mehrere Monate, bis ein Werkzeug zufriedenstellend funktioniert. Häufig handelt es sich um einen iterativen Prozess, der mit viel Ausschussteilen, Energie- und Ressourcenverbrauch verbunden ist. Die Erzeugung von Ankonstruktionen erfolgt heute weitgehend manuell und äusserst zeitaufwendig mittels Computer-Aided-Design-Systemen (CAD). Solche CAD-Systeme modellieren eine Geometrie von physischen Körpern, insbesondere also von Umfomteilen in verschiedenen Stadien der Bearbeitung, und von entsprechenden Werkzeugen. Dabei werden oftmals Hunderte einzelner Flächen über die Konstruktion von Kurven, daraus abgeleiteten Trägerflächen und deren Beschneidung (Trimmen) erzeugt und editiert. Nur schon das Erstellen einer Ankonstruktion für ein grösseres Karosserieteil kann so ohne weiteres mehrere Wochen in Anspruch nehmen. Diese Vorgehensweise verlangt vom Konstrukteur zudem grosses Fachwissen in den Bereichen Umformtechnik und CAD.

Im Einzelnen wird dabei beispielsweise wie folgt vorgegangen:

Bei der Entwicklung des Methodenplanes, das heisst einer Festlegung der Umformoperationen und was in welcher Operation geformt oder geschnitten wird, wird heute üblicherweise wie folgt vorgegangen. Als Grundlage für die Erläuterungen ist eine einfache Sequenz von Bearbeitungsschritten in den Figuren 2 bis 8 gezeigt: Figur 2 zeigt ein Blech oder eine Platine 1 in einem Ausgangszustand. In Figur 3 wird die Blechplatine 1 zwischen einer Matrize 11 und einem Blechhalter 10 gehalten. Matrize 11 und Blechhalter 10 sowie andere Halterungen und Werkzeuge sind in den folgenden Figuren nicht eingezeichnet. Figur 4 zeigt die Blechplatine 1 nach dem Tiefziehen, Figur 5 nach dem Beschneiden, Figur 6 nach dem Nachschlagen, Figur 7 nach dem Anstellen von Flanschen 5 und Figur 8 nach dem Einstellen der Flansche 5. Die einzelnen Zustände eines Umformteils werden auch Umformstufen genannt.

Ausgehend von der im CAD vorliegenden Bauteilgeometrie wird zuerst die Ziehoperation ausgelegt. Dies umfasst üblicherweise:

- Bestimmung von in der Ziehstufe nicht geformten Flanschbereichen
- Bestimmung einer hinterschnittfreien Ziehlage
- Auffüllen von Löchern
- Entwicklung der Blechhalterfläche und der Ankonstruktion
- Entschärfung/Vereinfachung (scharfkantiger) Geometriedetails, um das Tiefziehen zu ermöglichen
- Überbiegen/Bombieren einzelner Bereiche, um die Rückfederung zu kompensieren

Dann wird die Ankonstruktion (und Blechhalterfläche) überprüft, beispielsweise durch

- Kontrolle von Schnittwinkeln und Scherwinkeln

- Kontrolle der Grösse der kleinstmöglichen Platine

- Überprüfung der Umformbarkeit und der resultierenden Bauteilqualität durch ein Simulationsverfahren

- Bestimmung von Nachlaufkanten über Vergleich von Schnittlängen in einzelnen Schnittebenen oder durch Verfolgung von Materialpunkten in der Simulation.

Unter dem Begriff Simulation wird in diesem Zusammenhang eine Simulation eines Umform- oder Bearbeitungsprozesses verstanden, welche die physikalischen Eigenschaften eines Objektes berücksichtigt. Ebenfalls berücksichtigt werden Eigenschaften des Prozesses, wie beispielsweise Reibungen, Schmierung, Bearbeitungsgeschwindigkeit. In der Simulation werden beispielsweise Finite-Elemente-Methoden, finite Differenzen, "boundary element methods" oder sogenannte "meshless methods" benutzt.

CAD-Systeme modellieren also statische Zustände eines Teiles in verschiedenen Bearbeitungsstufen. Dabei wird das Modell jedes Zustands im wesentlichen manuell aus Grundbausteinen oder aus einem anderen Modell durch Modifikation erzeugt. Im Gegensatz dazu simuliert die Simulation einen dynamischen Prozess oder einen Übergang zwischen Zuständen unter Berücksichtigung und/oder Berechnung von physikalischen Eigenschaften wie Spannungen, Dehnungen, Schnittkräfte, Verfestigung, etc. CAD-Systeme und Simulationssysteme sind heute als getrennte Programmsysteme implementiert. Eine Interaktion findet allenfalls durch einen Datenaustausch von Geometriedaten statt.

Bei Nichterfüllen einzelner der oben genannten Prüfkriterien wird manuell eine iterative Änderung/Anpassung der Ankonstruktion durchgeführt.

Dann folgt eine Auslegung der folgenden Umformoperationen durch Bestimmung von:

- Arbeitsrichtungen
- Wirkflächen der Nachschlagwerkzeuge zur Fertigformung der Geometriedetails
- Wirkflächen der Abstell- / Einstellwerkzeuge zur Umformung der Flanschbereiche
- Beschneideoperationen (Schnittrichtungen und Beschneidesequenz)

Darauf erfolgt eine Überprüfung einer:

- Machbarkeit der Beschnittlinien durch geometrische Analyse; und einer
- Umformbarkeit und Bauteilqualität durch Umformsimulation.

In einem iterativen Vorgehen werden Folgeoperationen in analoger Weise bestimmt. Falls Ergebniskriterien nicht erfüllt sind, werden Geometrie und/oder Verfahrensparameter, von der Ziehoperation ausgehend, iterativ angepasst.

Nun liegt der Methodenplan vor, also die Vorschrift, wie und in welchen Umform- und Beschneidschritten das Bauteil zu fertigen ist.

Nach Freigabe des Methodenplanes folgt die Konstruktion der Werkzeugkörper, Gussmodelle, Erzeugung der CNC-Fräsdaten, und die Fertigung der Werkzeuge.

Dann folgt der Try-Out, also das Ausprobieren und Einarbeiten der Werkzeuge. Diese Einarbeitung ist zeit- und kostenaufwendig und kann sich über Monate erstrecken. Wenn nicht die gewünschte Qualität und Masshaltigkeit der Bauteile resultiert, müssen die Prozessparameter und die Werkzeuge angepasst werden (z.B. Vergrössern von Radien, Verändern von Bereichen durch Wegschleifen oder Aufschweissen von Material etc.) (kleine Iterationsschleifen). Im Extremfall muss die Methode angepasst werden (grosse Iterationsschleife). Insbesondere werden auch die korrekten Beschneidewerkzeuge, d.h. die Beschneidelinie, welche nach weiteren Umformungen zum masshaltigen Bauteilrand führt, iterativ durch Trial-and-Error ermittelt.

Die Anzahl notwendiger Try-Out-Schleifen hängt massgeblich von der Qualität des Methodenplanes ab, insbesondere von der Auslegung der Ziehoperation am Anfang der Umformung und damit von der Ankonstruktion.

Die oben beschriebene Vorgehensweise zur Erzeugung und Überprüfung der Ankonstruktion hat folgende schwerwiegende Nachteile:

- Die Abwicklung der Flansche, die Überprüfung der Schnittwinkel, die Bestimmung der kleinsten Platine und die Bestimmung der Nachlaufkanten erfolgt über 2D-Schnittanalysen rein geometrisch, beispielsweise über eine Länge von Schnittabwicklungen, eventuell mit heuristischen Korrekturfaktoren). Dies ist erstens ungenau, da die durch die Umformung verursachten Materialdehnungen nicht oder nur ungenau berücksichtigt werden; zweitens ist es unvollständig, da diese Schnittanalysen nicht an allen Stellen entlang der Bauteilränder durchgeführt werden können bzw. die Handhabung von den vorhandenen nicht ausgereiften CAD-Tools eine vollständige Analyse noch nicht ermöglichen.

- Werden physikalische Methoden statt rein geometrische, also Simulation benutzt, so erhöht sich zwar die Genauigkeit; die Überprüfung erfolgt dann aber streng sequentiell und in unterschiedlichen Programmen, also nachdem die Ankonstruktion modifiziert wurde, wird die Simulation in einem getrennten Schritt aufgesetzt, durchgeführt und ausgewertet. Jede Überprüfung ist dadurch ein zeitaufwendiger Schritt, was dazu führt, dass oft statt der genauen physikalischen Methode nur die rein geometrischen Methoden eingesetzt werden.

Es sollen deshalb Verfahren geschaffen werden, welche die Arbeitsweise mit einem CAD-System zum Entwurf von Umformteilen und entsprechenden Werkzeugen vereinfachen, und die Qualität der erzeugten Teile verbessern. Ebenso soll eine Treffsicherheit der Auslegung verbessert werden, so dass der Aufwand im Try-out verringert wird.

**DARSTELLUNG DER ERFINDUNG**

Es ist deshalb Aufgabe der Erfindung, ein Verfahren zur Bestimmung eines Modells einer Geometrie einer Umformstufe in einem Computer Aided Design (CAD)-System der eingangs genannten Art zu schaffen, welches die oben genannten Nachteile behebt. Ferner sollen ein entsprechendes Datenverarbeitungssystem, ein Computerprogramm und ein Datenträger geschaffen werden.

Diese Aufgabe wird entsprechend den Merkmalen der unabhängigen Patentansprüche gelöst.

Im Verfahren zur Bestimmung eines Geometrieobjektes zur Modellierung einer Geometrie einer Umformstufe in einem Computer Aided Design (CAD)-System werden also die folgenden Schritte ausgeführt:

- Definieren eines ersten Geometrieobjekts, welches ein Geometriemodell der Umformstufe in einem ersten Zustand aufweist;

- Definieren eines Operators zur Beschreibung einer Relation zwischen dem ersten Geometrieobjekt und einem zweiten Geometrieobjekt, welches die Umformstufe in einem zweiten Zustand beschreibt, wobei,der Operator Parameter zur Beschreibung mindestens eines Umformschrittes der Umformstufe aufweist; und

- automatisches Berechnen des zweiten Geometrieobjekts aus dem ersten Geometrieobjekt durch Ausführung eines Operatorverfahrens, welches anhand der Geometrie der Umformstufe im ersten Zustand, anhand der Parameter des mindestens einen Umformschrittes, und anhand einer physikalischen Simulation des mindestens einen Umformschrittes eine Geometrie der Umformstufe im zweiten Zustand bestimmt respektive berechnet.

Es wird dabei also ein Operator definiert, der ein erstes Geometriemodell mit einem zweiten Geometriemodell verknüpft. Der Verknüpfung ist ein Verfahren zur physikalischen Modellierung eines Bearbeitungsprozesses zugeordnet, welcher Bearbeitungsprozess eine Umformstufe aus einem entsprechenden ersten Zustand in einen zweiten Zustand überführt. Bei Änderungen des ersten Geometriemodells wird das zweite Geometriemodell entsprechend der physikalischen Modellierung automatisch nachgeführt.

Dadurch wird die physikalische Modellierung von Umformschritten in die statische geometrische Modellwelt eines CAD-Systems integriert. Es müssen somit nicht manuell Geometriedaten aus dem CAD-System in ein Simulationssystem übertragen, Umformparameter definiert, und aus der Simulation resultierende Geometriedaten eventuell wieder zurück in das CAD-System übertragen und analysiert werden. Stattdessen werden Informationen aus dem Geometriemodell des zweiten Zustands automatisch errechnet und beispielsweise einer Analyse im Rahmen des CAD-Systems zugänglich gemacht. Dadurch können Auswirkungen von iterativen Modifikationen, bei welchen Merkmale des ersten Zustands verändert werden, ohne wesentliche weitere Benutzermanipulationen im CAD-System selber visualisiert werden und/oder in einer weiteren geometrischen Modellierung verwendet werden.

Es stehen also für die relevanten Qualitätsmerkmale der Ankonstruktion genaue physikalische Überprüfungsmethoden zur Verfügung, welche assoziativ direkt an die Ankonstruktion gekoppelt werden. Jede Veränderung der Ankonstruktion führt damit automatisch und sofort zu einer Aufdatierung der Gütekriterien; der Effekt der Änderung ist sofort sichtbar, und zwar basierend auf Simulationsverfahren hoher Genauigkeit und nicht auf approximativen geometrischen Verfahren. Eine abgesicherte Ziehstufe und andere Umformstufen, und insbesondere deren Ankonstruktion, können wesentlich schneller mit wesentlich höherer Genauigkeit erzeugt werden. Dies hat neben der schnelleren Entwicklung des Methodenplanes auch eine deutliche Reduktion der Anzahl der kleinen und grossen Try-Out-Schleifen zur Folge.

Im Begriff Geometrieobjekt ist das Wort "Objekt" als computertechnischer Begriff zu verstehen, also als eine Einheit von zusammengehörenden Daten welche gemeinsam eine Entität beschreiben. Ein Geometrieobjekt weist eine Darstellung eines physischen Objektes oder eines Merkmals eines physischen Objektes auf, beispielsweise einer Linie, einer Fläche oder eines Körpers. Bei der Bestimmung eines Geometrieobjekts wird im Wesentlichen eine geometrische Modellbeschreibung eines physischen Objekts berechnet.

Durch den Operator werden zwei Geometrieobjekte einander assoziativ zugeordnet und sind somit assoziativ aneinander gebunden. Der Operator definiert, durch das enthaltene Berechnungsverfahren beispielsweise eine Abbildung zwischen Punkten der Geometriemodelle des ersten und des zweiten Zustands.

Die Begriffe "erster und zweiter Zustand" beziehen sich auf eine Folge in der Berechnung mittels des Operators, im Gegensatz zur Folge der Bearbeitungsschritte. In der tatsächlichen Herstellung der Umformstufe kann also der "erste" Zustand einem späteren Bearbeitungszustand als der "zweite" entsprechen.

In einer bevorzugten Variante der Erfindung werden auch Parameter, welche die Umformung entsprechend dem Operator beschreiben, bei der automatischen Aufdatierung des zweiten Modells durch die assoziative Anbindung berücksichtigt. Die Umformung besteht dabei aus einem einzelnen Umformschritt oder aus einer Folge von mehreren Umformschritten wie beispielsweise Tiefziehen und/oder Ziehen, Nachschlagen, Abstellen, Einstellen etc. Solche Parameter sind insbesondere eine Geometrie der Ankonstruktion, eine Geometrie von Werkzeugen des Umformschrittes, sowie Temperatur, Geschwindigkeit, Schmierung, Werkzeugkräfte, etc. der Umformung.

Vorzugsweise werden mindestens zwei Operatoren mit jeweils entsprechenden Operatorverfahren (siehe im nächsten Abschnitt) miteinander verkettet. Das heisst, dass ein zweiter der mindestens zwei Operatoren auf die durch einen ersten der mindestens zwei Operatoren bestimmte Geometrie der Umformstufe angewandt wird. Der erste Operator berechnet also aus der Geometrie im ersten Zustand automatisch eine Geometrie im zweiten Zustand, und der zweite Operator daraus wiederum automatisch eine Geometrie in einem dritten Zustand. Analog werden weitere Berechnungen entsprechend weiteren verketteten Operatoren durchgeführt.

Das Berechnungsverfahren für das dem Operator zugeordnete Umformverfahren wird der Einfachheit halber Operatorverfahren genannt. In bevorzugten Varianten der Erfindung ist das Operatorverfahren eines der folgenden Verfahren:

- Verfahren zur Berechnung einer Randlinie einer Umformstufe in einem Ausgangszustand vor einem Umformprozess aus einer Geometrie der Randlinie in einem Ergebniszustand nach dem Umformprozess. Dabei ist vorzugsweise die Randlinie eine Berandung einer Blechplatine vor dem Tiefziehen, und der Ergebniszustand beschreibt eine Ziehstufe nach dem Tiefziehen, oder die Randlinie ist eine Beschneidelinie, und der Ergebniszustand beschreibt eine fertig geformte Umformstufe.

- Verfahren zur iterativen Bestimmung einer Beschneidelinie aus einer Berandung einer fertig geformten Umformstufe durch wiederholte Simulation. Die Berandung entspricht in diesem Fall also dem vorgegebenen Verlauf.

- Verfahren zur Bestimmung eines Verlaufs einer Nachlaufkante, das heisst einer Begrenzungslinie einer Materialfläche, die durch das Tiefziehen über einen Ziehradius einer Matrize und/oder über eine Anhaukante eines Stempels Kratzlinien oder Riefen aufweist.

Diese Verfahren werden im Folgenden einzeln beschrieben. Die Verfahren können im Prinzip jeweils auch implementiert werden, ohne dass sie einem Operator im obigen Sinn zugeordnet sind. Jedoch ist die Einbindung in ein CAD-System mit einem Operator zur assoziativen Verknüpfung von Geometrieobjekten besonders vorteilhaft.

Das **Verfahren zur Berechnung einer Randlinie einer Umformstufe** weist vorzugsweise die folgenden Schritte auf:

- Generieren eines Rechennetzes, beispielsweise eines Finite-Elemente-Netzes oder entsprechend einer anderen Diskretierungsmethode zur Beschreibung einer Geometrie der Umformstufe im Ergebniszustand;

- Initialisierung von Zustandsparametern für eine Vielzahl von Netzelementen und/oder Netzknoten der Umformstufe im Ergebniszustand;

- Abbildung des Rechennetzes auf eine Geometrie der Umformstufe im Ausgangszustand;

- Berechnung von entsprechend der Abbildung geänderten Zustandsparametern in den abgebildeten Netzelementen und/oder Netzknoten (die abgebildeten Netzelemente und/oder Netzknoten beschreiben den Ausgangszustand der Umformstufe);

- Bestimmung eines ausgeglichenen Rechennetzes für den Ausgangszustand durch Verschieben von Netzelementen und/oder Netzknoten, bis Elementkräfte des Netzes und äussere Kräfte zumindest annähernd im Gleichgewicht sind, entsprechend beispielsweise einem Zustand minimaler Energie;

- Extraktion respektive Berechnung der Randlinie der Umformstufe im Ausgangszustand aus dem ausgeglichenen Rechennetz.

Zusammengefasst wird also zuerst eine geometrische Abbildung oder Abwicklung durchgeführt, und dann eine Ausgleichsrechnung zur Berücksichtigung der Material- und/oder Prozesseigenschaften. Dadurch wird es möglich, in einem einzigen Schritt und unter Kombination eines geometrischen Abbildungsverfahrens mit einer physikalisch fundierten Ausgleichsrechnung eine Randlinie in einem Ausgangszustand anhand des Ergebniszustands zu bestimmen. Die Genauigkeit der Bestimmung ist gegenüber einer reinen geometrischen Abbildung oder Abwicklung deutlich erhöht.

Die Zustandsparameter stammen dabei vorzugsweise aus mindestens einer der folgenden Kategorien von Parametern: Spannungen, Dehnungen, Schnittkräfte, Festigkeit oder Verfestigung und Blechdicke. Die Initialisierung im Ergebniszustand entspricht vorzugsweise einem Normzustand des Materials, insbesondere einem spannungs- und dehnungsfreien Zustand. Die Abbildung des Finite-Elemente-Netzes auf eine Geometrie der Umformstufe im Ausgangszustand geschieht vorzugsweise durch eine Projektion oder durch eine geometrische Abwicklung, also ohne Berücksichtigung respektive Simulation physikalischer Materialeigenschaften. Eine Berücksichtigung von physikalischen Materialeigenschaften geschieht erst, in sinnvoll beschränktem Masse, durch die vorzugsweise iterative Ausgleichsrechnung im Finite-Elemente-Netz.

Vorzugsweise geschieht vor dem Ausgleichen des Netzes eine Initialisierung entsprechend einem Zustand nach dem Tiefziehen oder nach einem weiteren Umformschritt, und insbesondere entsprechend einer Festigkeit respektive Verfestigung und/oder einer Dicke nach dem Tiefziehen. Dadurch werden die durch das Tiefziehen geänderten und vom Normzustand respektive Ausgangszustand des Materials abweichenden Zustandsparameter in der Ausgleichsrechnung berücksichtigt. Dadurch findet die physikalische Ausgleichsrechnung unter Bedingungen statt, die, wenn nicht genau, so doch näher am tatsächlichen Materialzustand liegen als der Normzustand. Damit wird die Genauigkeit der Berechnung erhöht. Dadurch, dass das Verfahren vom gewünschten Resultat ausgeht, rückwärts rechnet und dabei nur einen einzigen, zusammenfassenden fiktiven Umformschritt simuliert, ist es sehr schnell im Vergleich zu einer vollständigen Vorwärtssimulation aller Umformschritte. Dadurch sind auch die im folgenden beschriebenen Varianten schnell und effizient, und führen zu Informationen, die sofort nach Änderungen der Ankonstruktion oder anderer Ausgangsdaten dargestellt werden können.

Zur Erhöhung der Genauigkeit kann die Abwicklung und Ausgleichung auch über die Geometrie eines Zwischenschrittes zwischen dem Zustand der Umformstufe im Ausgangs- und Ergebniszustand vorgenommen werden. Dabei wird zuerst auf den Zwischenzustand abgewickelt, die Ausgleichung in diesem Zustand durchgeführt, und dann weiter auf den Ausgangszustand abgewickelt und hier wiederum die Ausgleichsrechnung durchgeführt. In analoger Weise sind auch mehrere Zwischenschritte möglich.

Vorzugsweise wird anhand des ausgeglichenen Rechennetzes eine Beurteilung der Umformbarkeit der Umformstufe durch den Umformprozess durchgeführt. Das heisst beispielsweise, dass automatisch untersucht wird, ob die Blechverdünnung nicht zu stark ist, ob Falten oder Wellen auftreten, oder ob das Blech durch die Umformung reissen würde.

In einer ersten bevorzugten Variante des Verfahrens zur Berechnung einer Randlinie einer Umformstufe ist der Umformprozess ein Tiefziehprozess, beschreibt der Ausgangszustand eine Blechplatine vor dem Tiefziehen, ist die Randlinie im Ausgangszustand eine Berandung der Blechplatine, und beschreibt der Ergebniszustand eine Ziehstufe nach dem Tiefziehen respektive nach dem weiteren Umformschritt.

Dadurch ist es möglich, von einer notwendigen minimalen Blechgrösse nach dem Tiefziehen auf die minimale Blechgrösse vor dem Tiefziehen zu schliessen. Damit kann der Einfluss der Ankonstruktion auf die Platinengrösse und damit auf Materialkosten abgeschätzt werden. Bei der Einbindung in ein CAD-System über einen assoziativen Operator wird der Einfluss einer Änderung der Ankonstruktion auf die Materialkosten im CAD-Modell unmittelbar während des Entwurfs und ohne weitere komplizierte Benutzereingriffe berechenbar. Der Einfluss kann so in einfacher Weise sichtbar gemacht, und/oder die veränderte Teilegeometrie in einer weiteren geometrischen Modellierung verwendet werden.

In einer zweiten bevorzugten Variante des Verfahrens zur Berechnung einer Randlinie einer Umformstufe weist der Umformprozess eine Abfolge von einzelnen Umformschritten auf, beschreibt der Ausgangszustand die Umformstufe nach einer Beschneideoperation, ist die Randlinie im Ausgangszustand eine Beschneidelinie, und beschreibt der Ergebniszustand eine fertig geformte Umformstufe.

Dadurch ist es möglich, von einer gewünschten Randlinie im Endprodukt ausgehend, also vom Rand respektive von der Kante der fertig geformten Umformstufe aus, in einem Schritt die Beschneidelinie auf der Tiefziehstufe (oder einer späteren Stufe) zu bestimmen, die zur gewünschten Randlinie führt. Natürlich kann analog auch von einer gewünschten Randlinie auf einer Zwischenstufe, die noch nicht dem Endprodukt entspricht, ausgegangen werden. Das "Endprodukt" im Sinne der obigen Beschreibung muss also nicht zwingend das Produkt des letzten Bearbeitungsschrittes sein.

Vorzugsweise werden charakteristische Eigenschaften der Beschneidelinie im Ausgangszustand automatisch bestimmt und bewertet, insbesondere ein Scherwinkel und/oder ein Schnittwinkel und/oder Schnittbankeigenschaften. Falls diese Eigenschaften nicht innerhalb vorgegebener Grenzen liegen, wird dies vorzugsweise durch eine entsprechende visuelle Markierung, beispielsweise Einfärbung der Beschneidelinie angezeigt. Vorzugsweise wird eine solche visuelle Darstellung von Eigenschaften der Beschneidelinie einer visuellen Darstellung der Umformstufe überlagert. Dabei wird ein ganzer Abschnitt der Beschneidelinie mit hoher Auflösung berechnet und dargestellt. Dies steht im Gegensatz zu bekannten Methoden, bei welchen nur einzelne wenige Schnittebenen quer zur Beschneidelinie betrachtet werden, und bei welchen zu jeder Schnittebene nur ein einzelner Punkt der Beschneidelinie bestimmbar ist.

Das Verfahren zur iterativen Bestimmung einer Beschneidelinie aus einer Berandung einer fertig geformten Umformstufe führt eine physikalische Simulation, insbesondere basierend auf der Methode der finiten Elemente durch, bei welcher aus einem hypothetischen Verlauf der Beschneidelinie ein hypothetischer Verlauf der Berandung berechnet wird. Der hypothetische Verlauf der Beschneidelinie wird bei wiederholtem Durchführen der physikalischen Simulation iterativ angepasst, bis der hypothetische Verlauf der Berandung dem vorgegebenen Verlauf bis auf eine vorgegebene Toleranz angenähert ist. Beispielsweise werden bei einer Abweichung von Randpunkten vom vorgegebenen Verlauf die entsprechenden Randpunkte der Beschneidelinie um einen zur Abweichung jeweils proportionalen Betrag verschoben. Dieses iterative Verfahren ist zwar rechen- und zeitaufwendiger als das oben beschriebene Einschrittverfahren, bei der Einbindung in ein CAD-System über einen assoziierten Operator wird es aber für einen Benutzer transparent und ohne weiteren manuellen Aufwand verwendbar. Das Resultat kann visualisiert oder in einer weiteren geometrischen Modellierung verwendet werden.

In einer bevorzugten Variante der Erfindung werden Beschneideoperationen an mehreren Umformstufen vorgenommen. Auch hier wird, von einem ersten Entwurf ausgehend, die Lage der Beschneidelinien auf den verschiedenen Umformstufen bestimmt und iterativ korrigiert. Es werden also mehrere Beschneideoperationen an jeweils anderen Umformstufen derselben Blechplatine durchgeführt und gemäss der Erfindung auch simuliert. Für jeweils einen von mehreren unterschiedlichen Abschnitten der Beschneidelinie entspricht dabei also der Ausgangszustand für diesen Abschnitt jeweils der Blechplatine nach einem unterschiedlichen Umformschritt.

Das Verfahren zur Bestimmung eines Verlaufs einer Nachlaufkante simuliert eine Tiefziehoperation, wodurch zu jedem einer Menge von materialfesten Punkten auf einer vorgegebenen Linie auf der Umformstufe vor dem Tiefziehen ein zugeordneter Punkt auf der Umformstufe nach dem Tiefziehen berechnet wird, und die Gesamtheit dieser zugeordneten Punkte die Nachlaufkante beschreibt.

Vorzugsweise wird die vorgegebene Linie auf der Umformstufe durch Projektion einer Werkzeuggeometrie auf die Umformstufe vor dem Tiefziehen als sogenannte Stempeldurchgangslinie berechnet. Alternativ wird die vorgegebene Linie auf der Umformstufe als eine Linie mit einem konstanten Abstand von einer inneren Blechhalterkante nach geschlossenem Blechhalter vor dem Tiefziehen berechnet.

Dadurch wird es möglich, einen ungefähren Verlauf der Nachlaufkante ohne aufwändige separate Simulation zu bestimmen. Bei der Einbindung in ein CAD-System über einen assoziativen Operator ist eine Berechnung und sofortige Visualisierung der Nachlaufkante im CAD-Modell während des Entwurfs möglich, sowie eine Verwendung der berechneten Nachlaufkante in einer weiteren geometrischen Modellierung..

Vorzugsweise wird nicht nur die Abbildung der erwähnten Punkte auf der vorgegebenen Linie berechnet, sondern die Abbildung aller Punkte des ganzen Bleches oder nur in einem vorgegebenen Bereich zwischen beispielsweise der Stempeldurchgangslinie und der inneren Blechhalterkante, oder zwischen der Stempeldurchgangslinie und der äusseren Blechberandung vor dem Tiefziehen. Damit wird eine bijektive Abbildung zwischen Punkten der Blechfläche oder des Blechkörpers vor und nach dem Tiefziehen bestimmt. Die Beschreibung der Punkte vor und nach dem Tiefziehen ist im ersten und zweiten Geometrieobjekt enthalten. Die bijektive Abbildung ist also ein Resultat des Operatorverfahrens respektive des Operators.

In einer bevorzugten Variante der Erfindung wird die Bestimmung der Nachlaufkante mit einem der Verfahren zur Bestimmung einer Beschneidelinie kombiniert.

Dadurch wird es möglich, die Geometrie der Nachlaufkante mit jener der Beschneidelinie zu vergleichen. Solange die Nachlaufkante auf der Ziehstufe ausserhalb der Beschneidelinie verläuft, werden auf dem fertig geformten Teil keine Kratzer respektive Riefen sichtbar werden. Es kann auch ein Sicherheitsabstand zwischen der Beschneidelinie und der Nachlaufkante vorgegeben werden, der eingehalten werden muss. Oder es kann, je nach Art des Produkts, auch ein Toleranzbereich entsprechend einer sogenannten Sichtbarkeitsgrenze angegeben werden, in welchem sich die Nachlaufkante innerhalb der Beschneidelinie befinden darf. In jedem Fall wird vorzugsweise in einer graphischen respektive visuellen Darstellung der Umformstufe markiert, beispielsweise durch entsprechendes Einfärben eines Verlaufs der Beschneidelinie und/oder der Nachlaufkante, ob die Anforderungen an den Verlauf der Nachlaufkante erfüllt sind.

Das Datenverarbeitungssystem zur Bestimmung eines Modells einer Geometrie einer Umformstufe in einem Computer Aided Design (CAD)-System weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zur Bestimmung eines Modells einer Geometrie einer Umformstufe in einem Computer Aided Design (CAD)-System gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt ein computerlesbares Medium auf, auf welchem die Computerprogrammcodemittel gespeichert sind.

Weitere bevorzugte Ausführungsformen gehen aus den abhängigen Patentansprüchen hervor.

**KURZE BESCHREIBUNG DER ZEICHNUNGEN**

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:

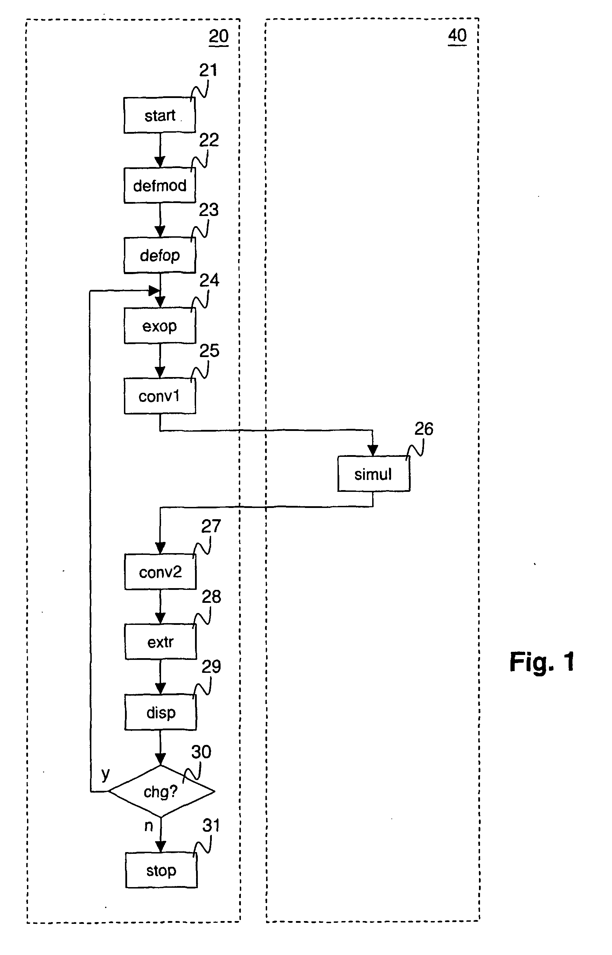

Figur 1          einen Ablauf eines Verfahrens gemäss der Erfindung;

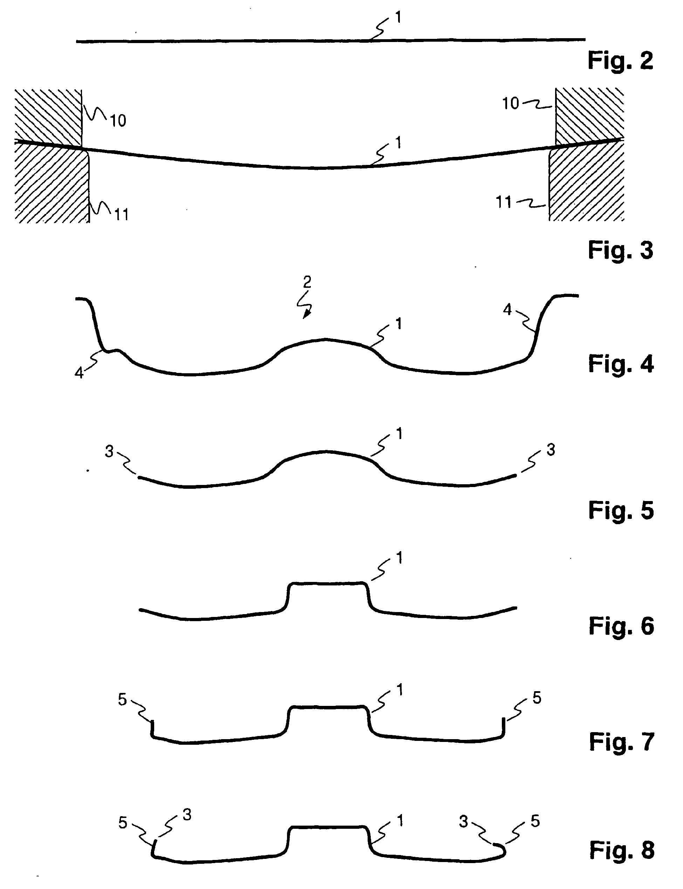

Figuren 2 bis 8  Verschiedene Bearbeitungsstufen eines Umformprozesses;

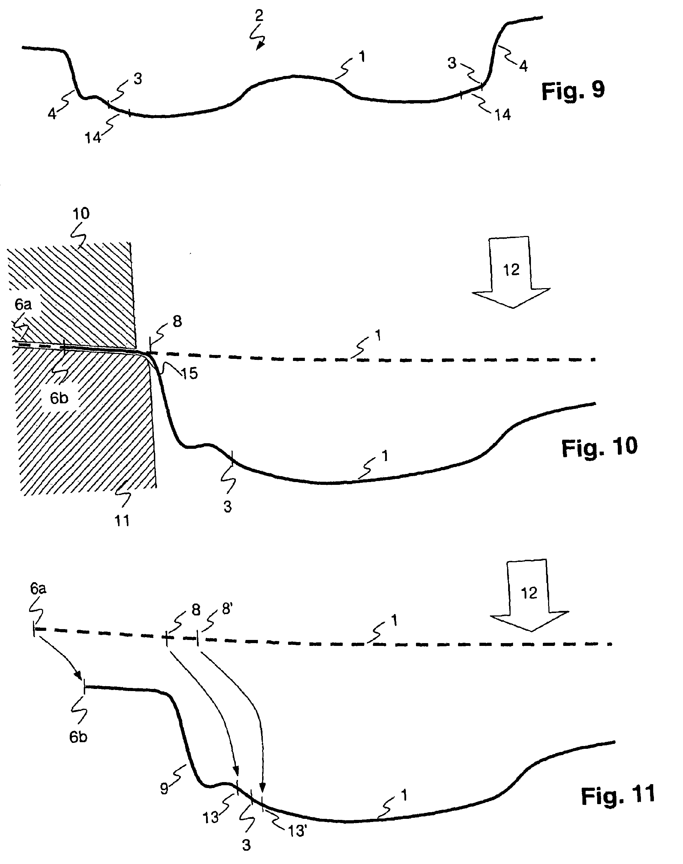

Figur 9          eine Tiefziehstufe mit darauf abgebildeten Flanschbereichen;

Figur 10         eine Detailansicht einer Platine vor und nach dem Tiefziehen; und

Figur 11         eine Verschiebung bestimmter Materialpunkte aus dieser Detailansicht.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**WEGE ZUR AUSFÜHRUNG DER ERFINDUNG**

Figur 1 zeigt einen Ablauf eines Verfahrens gemäss der Erfindung. Das Verfahren läuft zu Hauptsache in einem CAD-System 20 zur Konstruktion einer Geometrie von Umformstufen ab. Das Verfahren benutzt Funktionen eines physikalischen Simulationssystems 40, die entweder in das CAD-System 20 integriert werden, oder über eine Programmschnittstelle durch das physikalische Simulationssystem 40 zu Verfügung gestellt werden. Nach einem Start 21 des Verfahrens innerhalb des CAD-Systems 20 wird ein Schritt zur Modellerzeugung eines Geometrieobjekts 22 ausgeführt. Dabei wird das Modell beispielsweise im Arbeitsspeicherbereich eines Rechners anhand von Benutzereingaben oder anhand gespeicherter Modelldaten erzeugt, so dass es durch das CAD-System 20 bearbeitet werden kann. In einem Schritt zu Definition eines Operators 23 wird der Operator, welcher Geometrieobjekte zu einander in Beziehung setzt, manuell definiert oder aus einer gespeicherten Modellbeschreibung gelesen. Der Operator kann beispielsweise geschrieben werden als $f$, wobei

$$G_2 = f(G_1, P)$$

wobei $G_1$ ein erstes und $G_2$ ein zweites Geometrieobjekt bezeichnet, und P Parameter des Operators, also eine Beschreibung von einem oder mehreren entsprechenden Bearbeitungsschritten. Ein Berechnungsverfahren für das dem Operator zugeordnete Umformverfahren wird der Einfachheit halber Operatorverfahren genannt. Bei einem Anwenden eines Operators 24 wird das Operatorverfahren ausgeführt, wobei auch eine physikalische Simulation 26 durchgeführt wird. Dazu wird erst in einem ersten Konvertierungsschritt 25 aus einem CAD-Modell des ersten Geometrieobjekts ein Rechennetz, insbesondere ein Finite-Elemente-Netz erzeugt. Dieses wird durch die Simulation 26 unter Berücksichtigung physikalischer Materialeigenschaften einer Blechplatine 1 sowie von Prozesseigenschaften entsprechend einem oder mehreren physischen Bearbeitungsschritten modifiziert. Die Simulation kann auch mehrere iterativ durchgeführte Einzelsimulationen umfassen. Das modifizierte Finite-Elemente-Netz wird, falls nötig, in einer zweiten Konversion 27 in eine dem CAD-System 20 zugängliche Darstellung umgewandelt. In einem Schritt zur Extraktion relevanter Merkmale 28 werden die für den betreffenden Operator relevanten Merkmale im Modell extrahiert. Dieser Schritt 28 kann optional auch vor der zweiten Konversion 27 geschehen. In einer Darstellung 29 werden die relevanten Merkmale in einer Visualisierung dargestellt, beispielsweise einer Darstellung der umgeformten Blechplatine 1 in einer bestimmten Bearbeitungsstufe überlagert. Sie können natürlich auch in weiteren Schritten der geometrischen Modellierung verwendet werden.

Computertechnisch ist der Operator durch eine Datenstruktur oder ein Softwareobjekt im Sinne der objektorientierten Programmierung implementiert, welche beispielsweise Zeiger auf die verknüpften Geometrieobjekte, und Eigenschaften der einen oder mehreren Bearbeitungsschritten repräsentiert. Eine Überwachungsroutine des CAD-Systems 20 kontrolliert im Schritt "Warten auf Änderungen" 30, ob Änderungen im ersten Geometrieobjekt oder in den Parametern stattgefunden haben, und löst eine Neuberechnung entsprechend dem Operatorverfahren aus. Solange die betrachteten Geometrieobjekte im CAD-System 20 bearbeitet werden, befindet sich das Verfahren im Wartezustand 30 oder in der Neuberechnung 24-29. Beim Beenden der Bearbeitung wird das Verfahren beendet 31.

Die Figuren 2 bis 8 zeigen verschiedene Bearbeitungsstufen eines Umformprozesses, jeweils in einem Querschnitt. Figur 2 zeigt ein Blech, auch Platine 1 genannt, im flachen Ausgangszustand. Figur 3 zeigt den Verlauf der Blechplatine 1 nach dem Einspannen zwischen einer Matrize 11 und einem Blechhalter 10 einer Tiefziehpresse. Nach dem Ziehen durch einen nicht gezeichneten Stempel weist die Blechplatine 1 die Form gemäss Figur 4, auch Ziehstufe genannt, auf. Die Ziehstufe weist eine sogenannte Ankonstruktion 4 auf, die später weggeschnitten wird, aber die Materialeigenschaften im Endprodukt gleichwohl beeinflusst. Figur 5 zeigt die Blechplatine 1 nach einer Beschneideoperation, welche entlang einer Beschneidelinie 3 vorgenommen wird, und wobei eine Rand der Blechplatine 1 gebildet wird. Figur 6 zeigt die Blechplatine 1 nach einem Nachschlagen, wobei einzelne Formen stärker ausgeformt werden. Figur 7 zeigt die Blechplatine 1 nach einem Abstellen von Flanschen 5, und Figur 8 nach einem Einstellen der Flansche 5.

Andere Querschnitte durch die Blechplatine 1 (beispielsweise von oben nach unten und senkrecht zur Zeichnungsebene) sind ähnlich wie die gezeichneten geartet. Die gezeigte Bearbeitungsfolge ist beispielhaft vereinfacht. Es können weitere Bearbeitungsschritte ähnlicher Art eingefügt sein, um einzelne Detailformen, beispielsweise Durchbrüche zu gestalten. Auch können mehrere Beschneideoperationen durchgeführt werden, beispielsweise nach dem Nachschlagen.

Figur 9 zeigt eine Tiefziehstufe mit darauf abgebildeten Flanschbereichen 14. Damit wird eine Abwicklung der Beschneidelinie 3 vom Endzustand gemäss Figur 8 auf die Ziehstufe 2 illustriert. Die Abwicklung kann in einem einzigen Schritt oder über eine oder mehrere Zwischenstufen vorgenommen werden.

Figur 10 zeigt eine schematische Detailansicht einer Platine vor und nach dem Tiefziehen. Die Figur ist schematisch in dem Sinne dass in der Realität die Blechplatine 1 zwischen Blechhalter 10 und Matrize 11 gehalten wird, und eng über einen Ziehradius 15 der Matrize 11 gezogen wird. Es ist zusätzlich eine Blechberandungslinie vor dem Tiefziehen 6a, eine Blechberandungslinie nach dem Tiefziehen 6b, eine Stempeldurchgangslinie 8 und eine Stempelrichtung 12, also die Bewegungsrichtung des nicht eingezeichneten Stempels, gezeigt. Figur 11 zeigt eine Verschiebung bestimmter Materialpunkte aus dieser Detailansicht, und einen Bereich mit Riefen 9, der durch das Tiefziehen auf der Blechplatine 1 entsteht.

Im folgenden werden nun bevorzugte Operatorverfahren beschrieben.

**Genaue Abwicklung der Beschnittlinie und Machbarkeit der Flansche**

Statt einer üblichen geometrischen Abwicklung in einzelnen Schnitten senkrecht zur Randlinie wird eine physikalische Abwicklung mittels inverser Einschrittsimulation durchgeführt.

Diese Methode wird angewendet für die Umformoperationen zur Erzeugung der Flansche 5. Sie ist in den CAD-Prozess als physikalischer Operator der Assoziativität einbindbar, welcher Operator die auf die Ankonstruktion abgewickelte Bauteilrandlinie mit der Ankonstruktion verbindet. Dadurch bildet die Methode ein zuverlässiges Analysemittel zur Beurteilung der Herstellbarkeit der Flansche 5, welche Analyse respektive deren Resultate vorzugsweise ebenfalls assoziativ an die Ankonstruktion gebunden ist.

Dabei werden vorzugsweise die folgenden Schritte ausgeführt, siehe dazu auch die Figuren 8 und 9, welche das fertig geformte Bauteil und die Ziehstufe 2 zeigen.

a) Generierung des Finite-Elemente-Netzes als Rechennetz auf dem Bauteil mit zwischen- oder fertiggeformten Flanschen 5.

b) Abbildung dieses Netzes auf die Geometrie der Ziehstufe 2 vor Umformung der Flansche 5. Dieses Netz stellt die Startlösung für die Gleichgewichtsiteration d) dar. Als Abbildungsfunktion können zum Beispiel eine Projektion in Stempelrichtung, geometrische Abwicklungen oder rotatorische Projektionsalgorithmen verwendet werden.

c) Initialisierung der Dehnungen und Spannungen im Bauteilnetz; entweder auf null, falls die durch die Umformung der Ziehstufe verursachten Dehnungen und Spannungen nicht berücksichtigt werden sollen, oder Initialisierung auf die Dehnungs- und Spannungswerte und/oder Verfestigung respektive Festigkeit und Blechdicke der Ziehstufe 2 in der Startlösung.

d) Iteration des Gleichgewichtes mittels der inversen Finite-Elemente-Methode in der Ziehstufe. Dabei werden die Netzknoten entlang der Ziehstufe solange iterativ verschoben, bis die Elementkräfte in den Knoten im Gleichgewicht sind. Dabei wird also das Gleichgewicht in der Ausgangslage der Umformung (also auf der Ziehstufe) iteriert, d.h. es wird diejenige Knotenlage im Ausgangszustand gesucht, welche im vorgegebenen Endzustand (Bauteilnetz) zu einem Gleichgewichtszustand führt. Als Stoffgesetz kann z.B. näherungsweise ein elastisches, starr-plastisches oder aber ein genaueres elasto-plastisches angewendet werden.

e) Evt. Re-Iteration der Initialisierung der Dehnungen und Spannungen, falls die Dehnungen und Spannungen in der Ziehstufe berücksichtigt wurden. Dies ist notwendig, da das Ausgangsnetz sich verschoben hat und damit an einem bestimmten Materialpunkt andere Initialdehnungen und -spannungen vorliegen können. Die Re-Initialisierung kann auch simultan mit der Gleichgewichtsiteration erfolgen.

Anstelle der Spannungen und Dehnungen können in analoger Weise auch Schnittkräfte verwendet werden.

Resultat ist das ausiterierte Netz in der Ziehstufe: Sein Rand stellt die auf die Ziehstufe 2 abgewickelte Flanschberandung 3 dar. Die ermittelten Dehnungen in der Ziehstufe 2 können invertiert werden und stellen dann die durch das Flanschen entstandenen Dehnungen im Bauteil 1 dar. Damit wird bei jeder Änderung der Ziehstufengeometrie, insbesondere deren Ankonstruktion 4, sofort ohne weitere Arbeitsschritte jeweils die resultierende abgewickelte Bauteilberandung 3, also die Lage der Beschneidelinie 3 auf der Ankonstruktion 4 sichtbar, und gleichzeitig auch die durch die Umformung der Flansche 5 erzeugten Dehnungen und Spannungen (sowie daraus abgeleitete Grössen) in den Flanschen 5 sichtbar; dies ermöglicht zu erkennen, ob ein Flansch 5 überhaupt formbar ist.

Vorteile des Verfahrens sind: eine stark beschleunigte Entwicklung einer bezüglich folgenden Flanschoperationen optimalen Ankonstruktion 4. Das Verfahren bildet auch eine Grundlage für eine Analyse einer Machbarkeit der Beschneidelinie, wie sie weiter unten beschrieben ist; und führt zu weniger notwendigen Try-Out-Iterationen.

### Kleinst mögliche Platine / Umformbarkeit und Bauteilqualität

Die Bestimmung einer kleinst möglichen Platine mittels inverser Einschrittsimulation erlaubt die Abschätzung der Materialkosten, und ergibt eine Startplatine für die Simulation des Umformprozesses sowie für den Try-Out.

Die Bestimmung der kleinst möglichen Platinenberandung kann assoziativ an die Ankonstruktion bzw. an die Geometrie der Ziehoperation angebunden werden.

Dadurch ist sie in den CAD-Prozess durch einen physikalischen Operator der Assoziativität einbindbar. Sie ist gleichzeitig auch ein zuverlässiges Analysemittel zur Beurteilung der Machbarkeit der Ziehoperation, wobei eine Darstellung der Analyse ebenfalls assoziativ an die Ankonstruktion bzw. Ziehstufe gebunden ist.

Eine mögliche Ausführung des Verfahrens zur Bestimmung der kleinst möglichen Platinenberandung basiert auf den Verhältnissen gemäss Figur 10. Das Verfahren ist im Grundsatz analog zu dem oben beschriebenen Verfahren zur Bestimmung der Beschnittlinie. Anstelle der Verschiebung der Beschnittlinie über verschiedene Umformschritte wird eine Verschiebung der Platinenberandung beim Tiefziehen betrachtet. Dies ergibt die folgenden Schritte zur Simulation der Ziehoperation mit der inversen Einschrittsimulation:

a) Vorgabe der gewünschten Blechberandung 6b nach der Ziehoperation auf dem Ziehwerkzeug. Diese Berandungslinie 6b kann auch automatisch erzeugt werden, z.B. als Linie mit konstantem Offset zur Stempeldurchgangslinie.

b) Vernetzung der durch diese Linie berandeten Ziehgeometrie.

c) Initialisierung der Dehnungen und Spannungen oder Schnittkräfte in diesem Netz auf null.

d) Ermittlung einer Startlösung für die Gleichgewichtsiteration in der Ausgangsblechebene z.B. durch Projektion.

e) Iteration des Gleichgewichtes mit der inversen Finite-Elemente-Methode im ebenen Ausgangsblech.

In den obigen Schritten können jeweils auch Randbedingungen wie Rückhaltekräfte, insbesondere Blechhalterkräfte berücksichtigt werden.

Alternativ kann diese Simulation auch in mehreren Schritten erfolgen, z.B. in einem ersten Schritt von der Ziehgeometrie zurück auf die Blechhalterfläche, dann in einem zweiten Schritt auf das ebene Ausgangsblech.

Resultat ist die notwendige Berandung 6a des ebenen Ausgangsbleches 1, welche nach der Ziehoperation zur vorgegebenen Blechberandung 6b führt. Gleichzeitig können die Dehnungen und Spannungen ausgewertet werden - diese erlauben dann eine Abschätzung der Umformbarkeit/Bauteilqualität für die Ziehoperation, welche assoziativ an die CAD-Konstruktion gebunden ist; jede Änderung von Ankonstruktion (oder auch Bauteil) resultiert sofort in einer neuen Minimalplatine und in einer Visualisierung der Umformbarkeit. Aus der Grösse der Minimalplatine können die Materialkosten abgeschätzt werden. Damit ist der Einfluss einer Änderung der Ziehstufengeometrie, insbesondere der Ankonstruktion 4 auf die Materialkosten sofort sichtbar, was die Optimierung der Ankonstruktion 4 bzgl. Materialkosten stark vereinfacht.

### Machbarkeit des Beschnittes, Ermittlung der optimalen Beschnittrichtung

Dabei werden charakteristische Eigenschaften der Beschneidelinie im Ausgangszustand automatisch bestimmt und bewertet. Dies beinhaltet eine Bewertung der Beschneidelinie und der Schnittbank bezüglich Machbarkeit (Schneidwinkel und Scherwinkel, Breite und Flachheit der Schnittbank), und eine Bestimmung der Beschnittrichtung.

Die Bestimmung und Auswertung der Schnittwinkel- und Schnittbankeigenschaften ist vorzugsweise assoziativ an die Ankonstruktion gebunden. Vorzugsweise geschieht eine Darstellung des Schnittwinkels entlang der Schnittlinie 3 über Farben, so dass eine vollständige Information entlang der Schnittlinie vorliegt, nicht nur eine punktuelle Analyse in einzelnen Punkten. Die Auswertung geschieht vorzugsweise auch nicht nur an der Schnittlinie selber, sondern über ein beidseits der Schnittlinie in der Blechplatine 1 verlaufendes Band, einer sogenannten Schnittbank. Zusätzlich kann eine automatische Bestimmung der optimalen Schnittrichtung oder eine automatische Zuweisung einer Arbeitsrichtung an Bereiche von Beschneidelinien geschehen.

Eine mögliche Ausführung ist: Die abgewickelte Schnittlinie auf der Ankonstruktion kann nach jeder Änderung der Ziehstufengeometrie respektive der Ankonstruktion neu bzgl. Schnitt- und Scherwinkel ausgewertet und sofort farblich dargestellt werden. Dazu muss vorher definiert sein, aus welcher Richtung die Beschneidelinien 3 oder Bereiche der Beschneidelinien 3 beschnitten werden sollen; vorzugsweise ist dies die Hauptarbeitsrichtung einer der Umformoperationen, es können jedoch auch seitliche Richtungen sein (bei Schieberschnitten). Alternativ lassen sich für gegebene Bereiche von Beschneidelinien 3 die optimale Schnittrichtung ermitteln, indem selbständig eine Schnittrichtung gewählt wird, welche auf allen gewählten Bereichen der Beschneidelinien 3 die Bewertungskriterien erfüllen, oder indem der mögliche Winkelbereich für die Arbeitsrichtung in einem Diagramm dargestellt wird und der Anwender mit Hilfe dieses Diagrammes oder einer grafischen Darstellung eine Arbeitsrichtung wählt. Ferner besteht auch die Möglichkeit, dass Beschneidelinienbereiche automatisch einer aus einer gegebenen Menge von Arbeits- und/oder Schieberrichtungen zugeordnet werden, so dass die Bewertungskriterien erfüllt werden.

Die in den Folgeoperationen zu formenden Flansche 5 werden auf die Ankonstruktion abgewickelt, um die Beschnittlinien 3 zu erhalten. Die Beschnittlinien 3 werden auf Machbarkeit überprüft:

-     Der Schnittwinkel sollte kleiner als eine vorgegebene Limite, z.B. 15 Grad sein. Der Schnittwinkel charakterisiert die Schräge der entstehenden stirnseitigen Schnittfläche und wird z.B. wie folgt definiert: Der Schnittwinkel wird von der Oberflächennormalen an der Schnittkurve und der Projektion der Schnittrichtung auf die Normalenebene der Schnittkurve eingeschlossen.

-     Der Scherwinkel sollte kleiner als eine vorgegebene Limite, z.B. 80 Grad sein. Der Scherwinkel charakterisiert die Schräge des Messerangriffs und wird z.B. wie folgt definiert: Der Scherwinkel wird von der Oberflächennormalen an der Schnittkurve und der Projektion der Schnittrichtung auf die Ebene, welche durch die Oberflächennormale und den Tangentialvektor an die Schnittlinie gebildet wird, eingeschlossen.

-     Die Breite der Schnittbänke: in einem z.B. auf beiden Seiten 5 mm breiten Band entlang der Schnittlinie 3 sollten die Schnitte der Geometrie in auf der Schnittlinie senkrecht stehenden Ebenen genügend flach sein. Dazu kann z.B. der maximale Krümmungsradius dieser Schnitte in dem Band ermittelt werden; dieser muss dann grösser als eine Limite sein, z.B. grösser als 20mm. Grund dafür ist die Notwendigkeit einer "sauberen" Auflage für die Haltewerkzeuge, einer Minimalbreite resp. Minimalstärke von Haltewerkzeugen und Schnittmesser, oder einer "Reserve", falls an die Schnittbänke angrenzende Flächen während dem Try-Out geändert werden müssen.

Bei Nichterfüllen einzelner Kriterien geschieht eine iterative Änderung/Anpassung der Zwischenstufe, insbesondere der Ankonstruktion 4.

Der Ablauf gemäss den Figuren 2 bis 8 entspricht einem sehr einfachen Prozess. Oft werden beispielsweise Beschneideoperationen an mehreren Umformstufen vorgenommen. Unterschiedliche Abschnitte der endgültigen Randlinie stammen also aus Beschneidungen von unterschiedlichen Umformstufen desselben Bleches. Auch hier wird, von einem ersten Entwurf ausgehend, die Lage der Beschneidelinien auf den verschiedenen Umformstufen bestimmt und iterativ korrigiert.

Die kombinierte Simulation der aufeinanderfolgenden Bearbeitungsschritte ergibt einen aktuellen Bauteilrand im Endzustand, welcher je nach Fortschritt der Iteration nahe an dem gewünschten vorgegebenen Bauteilrand im Endzustand liegt. Damit kann im Endzustand jedem Materialpunkt des aktuellen Bauteilrandes ein Punkt des gewünschten vorgegebenen Bauteilrandes und eine entsprechende Abweichung zugewiesen werden. Damit ist eine Abweichungsverteilung entlang des Bauteilrandes im Endzustand und, über eine Rückwärtsabbildung mit Hilfe der Materialpunkte, in den vorangehenden Umformstufen definiert. Diese Abweichungsverteilung wird nun dazu benutzt, um einen Abschnitt der Beschneidelinie in einer Beschneideoperation auf einer vorangehenden Umformstufe, in welcher der entsprechende Abschnitt des Bauteilrandes erzeugt wird, iterativ zu korrigieren respektive anzupassen mit dem Ziel, dass die in der Iteration folgende Simulation der aufeinanderfolgenden Bearbeitungsschritte unter Verwendung dieser neuen Beschneidelinie im Endzustand einen entsprechenden Abschnitt des Bauteilrandes liefert, welcher näher an dem gewünschten vorgegebenen Bauteilrand liegt. Diese iterative Simulation der aufeinanderfolgenden Bearbeitungsschritte wird solange durchgeführt, bis die Abweichung im Endzustand zwischen dem aus der Simulation resultierenden und dem vorgegebenen Bauteilrand für alle in den unterschiedlichen Umformstufen erzeugten Randabschnitte eine vorgegebene Toleranz unterschreitet.

**Nachlaufkanten**

Nachlaufkanten entstehen, wenn das Blech über den Ziehradius 15 fliesst. Der Ziehradius 15 ist eine innere Kante der Matrize 11, über welche die Blechplatine 1 gezogen wird. Die innere Berandung aller Materialpunkte, welche über den Ziehradius 15 geflossen sind, wird als Nachlaufkante 13 bezeichnet. Zwischen Nachlaufkante 13 und Ziehradius 15 bilden sich Riefen respektive ein Bereich mit Oberflächenkratzern oder Riefen 9. Diese Riefen dürfen nach der Ziehoperation nicht in einen sichtbaren Bereich des fertigen Bauteils zu liegen kommen. Riefen und entsprechend auch eine Nachlaufkante entstehen analog auch auf der anderen Blechseite, indem das Blech 1 über eine sogenannte Anhaukante des Stempels gezogen wird.

Die Bestimmung der Nachlaufkanten 13 geschieht vorzugsweise mittels einer Simulation, wobei diese fest in den CAD-Prozess eingebunden ist. Dabei wird eine assoziative Anbindung der Nachlaufkante 13 an die Ankonstruktion 4 über einen physikalischen Assoziativitätsoperator vorgenommen. Eine Änderung der Nachlaufkante 13 wird dabei bei jeder Änderung der Ankonstruktion 4 sofort sichtbar; eine diesbezüglich optimale Ankonstruktion 4 kann wesentlich schneller und sicherer erzeugt werden.

Eine mögliche Ausführung basiert auf den Verhältnissen gemäss Figur 11: Die Ziehoperation wird simuliert, beispielsweise mit einem einzigen oder zwei aufeinanderfolgenden Einschrittverfahren (vorwärts oder rückwärts; auch ein inkrementelles Verfahren wäre möglich). Dabei sollte bei Verwendung zweier Schritte als Zwischengeometrie die Blechform nach Schliessen des Blechhalters, wie in Figur 3, vorliegen, sowie die umgeformte Geometrie am Ende der Ziehoperation. Über die materialfesten Punkte liegt dabei eine bijektive Abbildung zwischen diesen beiden Geometrien vor. Die Materialpunkte, welche nach Schliessen des Blechhalters am Anfang des Ziehradius liegen oder in einer ähnlichen Weise definiert sind, bilden in der Geometrie am Ende der Ziehoperation die Nachlaufkante.

Zur Bestimmung der Nachlaufkante 13 wird beispielsweise von einer Projektion der Stempeldurchgangslinie 8 auf die Umformstufe vor dem Tiefziehen ausgegangen. Die Stempeldurchgangslinie 8 ist im Wesentlichen ein Schnitt einer Verlängerung einer senkrechten Fläche der Matrize 11 mit der Blechplatine 1. Durch die Simulation wird bestimmt, wo die Punkte der Stempeldurchgangslinie 8 auf der Ziehstufe 2 zu liegen kommen. Diese Punkte werden als Nachlaufkante 13 betrachtet. In einer anderen Variante der Erfindung wird von einer Linie 8', die sich in einem konstanten Abstand innerhalb der Stempeldurchgangslinie 8 befindet, ausgegangen. Daraus resultiert eine zweite Nachlaufkante 13'. Im gezeigten Beispiel liegt die zweite Nachlaufkante 13'. innerhalb der Beschneidelinie 3. Je nach den Anforderungen an das Teil ist dies zulässig oder nicht. In einer weiteren Variante wird von einer Linie mit einem konstanten Abstand von einer inneren Blechhalterkante bei eingespanntem Umformteil vor dem Tiefziehen ausgegangen.

**BEZUGSZEICHENLISTE**

1 Blechplatine
2 Ziehstufe
3 Beschneidelinie
4 Ankonstruktion
5 Flansch
6 Blechberandungslinie
6a Blechberandungslinie vor dem Tiefziehen
6b Blechberandungslinie nach dem Tiefziehen
8 Stempeldurchgangslinie
9 Bereich mit Riefen
10 Blechhalter
11 Matrize
12 Stempelrichtung
13 Nachlaufkante
14 abgewickelter Flansch
15 Ziehradius
20 CAD-System
21 Start
22 Modellerzeugung von Geometrieobjekt, defmod
23 Definition eines Operators, defop
24 Anwenden eines Operators, exop
25 erste Konversion, conv1
26 physikalische Simulation, simul
27 zweite Konversion, conv2
28 Extraktion relevanter Merkmale, extr
29 Darstellung, disp
30 Warten auf Änderungen, chg?
31 Stop
40 physikalisches Simulationssystem

**Patentansprüche**

1. Verfahren zur Bestimmung eines Modells einer Geometrie einer Umformstufe (1) eines Blechumfonnteiles in einem Computer Aided Design (CAD)-System, aufweisend die folgenden Schritte:

• Definieren eines ersten Geometrieobjekts, welches ein Geometriemodell der Umformstufe (1) in einem ersten Zustand aufweist;
• Definieren eines Operators zur Beschreibung einer Relation zwischen dem ersten Geometrieobjekt und einem zweiten Geometrieobjekt, welches ein Geometriemodell der Umformstufe in einem zweiten Zustand beschreibt, wobei der Operator die beiden Geometrieobjekte einander zuordnet und Parameter zur Beschreibung mindestens eines Umformschrittes der Umformstufe (1) aufweist; und
• automatisches Berechnen des zweiten Geometrieobjekts aus dem ersten Geometrieobjekt durch Ausführung eines dem Operator zugeordneten Verfahrens, im folgenden Operatorverfahren genannt, welches anhand der Geometrie der Umformstufe (1) im ersten Zustand, anhand der Parameter des mindestens einen Umformschrittes, und anhand einer physikalischen Simulation des mindestens einen Umformschrittes eine Geometrie der Umformstufe (1) im zweiten Zustand bestimmt;

wobei mindestens zwei Operatoren mit jeweils entsprechenden Operatorverfahren definiert sind, und dass die Operatoren verkettet werden, das heisst, dass ein zweiter der mindestens zwei Operatoren auf die durch einen ersten der mindestens zwei Operatoren bestimmte Geometrie der Umformstufe (1) angewandt wird;

wobei ein Gperatorverfahxen jeweils eine Beschneidelinie (3) einer Tiefziehstufe oder einer nachfolgenden Stufe in einem Ausgangszustand vor einem Umformprozess aus einer Geometrie der Beschneidelinie (3) in einem Ergebniszustand nach dem Umformprozess berechnet, und ein Operatorverfahren die folgenden Schritte aufweist:

• Generieren eines Rechennetzes zur Beschreibung einer Geometrie der Umformstufe (1) im Ergebniszustand;
• Initialisierung von Zustandsparametern für eine Vielzahl von Netzelementen respektive Netzknoten der Umformstufe (1) im Ergebniszustand;
• Abbildung des Rechennetzes auf eine Geometrie der Umformstufe (1) im Ausgangszustand;
• Berechnung von entsprechend der Abbildung geänderten Zustandsparametern in den abgebildeten Netzelementen respektive Netzknoten;
• Bestimmung eines ausgeglichenen Rechennetzes für den Ausgangszustand durch Verschieben von Netzelementen respektive Netzknoten, bis Elementkräfte des Netzes und äussere Kräfte zumindest annähernd im Gleichgewicht sind;
• Extraktion der Beschneidelinie (3) der Umfonnstufe (1) im Ausgangszustand aus dem ausgeglichenen Rechennetz.

2. Verfahren gemäss Anspruch 1, wobei bei einer Änderung der Parameter zur Beschreibung mindestens eines Umformschrittes das zweite Geometrieobjekt automatisch neu berechnet respektive angepasst wird.

3. Verfahren gemäss Anspruch 1 oder 2, wobei die Zustandsparameter aus mindestens einer der folgenden Kategorien von Parametern stammen: Spannung, Dehnung, Schnittkräfte, Verfestigung respektive Festigkeit. Blechdicke.

4. Verfahren gemäss Anspruch 1 oder 2 oder 3, wobei die Initialisierung im Ergebniszustand einem Normzustand des Materials, insbesondere einem spannungs- und dehnungsfreien Zustand entspricht

5. Verfahren gemäss einem der Ansprüche 1 bis 4, wobei vor dem Ausgleichen des Netzes eine Initialisierung entsprechend einem Zustand nach dem Tiefziehen geschieht, insbesondere entsprechend einer Festigkeit und/oder einer Dicke nach dem Tiefziehen.

6. Verfahren gemäss einem der Ansprüche 1 bis 5, wobei anhand des ausgeglichenen Rechennetzes eine Beurteilung der Umformbarkeit der Umformstufe (1) durch den Umformprozess durchgeführt wird.

7. Verfahren gemäss einem der Ansprüche 1 bis 6, **dadurch gekennzeichnet, dass** der Umformprozess ein Tiefziehprozess ist, der Ausgangszustand eine Blechplatine (1) vor dem Tiefziehen beschreibt, die Randlinie im Ausgangszustand eine Berandung (6a) der Blechplatine (1) ist, und der Ergebniszustand eine Ziehstufe nach dem Tiefziehen beschreibt,

8. Verfahren gemäss Anspruch 1, **dadurch gekennzeichnet, dass** charakteristische Eigenschaften der Beschneidelinie im Ausgangszustand automatisch bestimmt und bewertet werden, insbesondere ein Scherwinkel und/oder ein Schnittwinkel und/oder Schnittbankeigenschaften, und dass optional eine optimale Schnittrichtung berechnet wird.

9. Verfahren gemäss Anspruch 8, **dadurch gekennzeichnet, dass** eine visuelle Darstellung von Eigenschaften eines ganzen Abschnittes der Beschneidelinie (3) einer visuellen Darstellung der Umformstufe (1) überlagert wird.

10. Verfahren gemäss einem der Ansprüche 1 oder 2, wobei das Operatorverfahren eine Berechnung einer Beschneidelinie (3) als zweitem Geometrieobjekt aus einer Berandung einer fertig geformten Umformstufe (1) als vorgegebenem Verlauf als erstem Geometrieobjekt durchführt, indem eine physikalische Simulation durchgeführt wird, bei welcher aus einem hypothetischen Verlauf der Beschneidelinie ein hypothetischer Verlauf der Berandung berechnet wird, und der hypothetische Verlauf der Beschneidelinie (3) bei wiederholtem Durchführen der physikalischen Simulation automatisch und iterativ angepasst wird, bis der hypothetische Verlauf der Berandung dem vorgegebenen Verlauf bis auf eine vorgegebene Toleranz angenähert ist.

11. Verfahren gemäss Anspruch 10, **dadurch gekennzeichnet, dass** mehrere Beschneideoperationen an jeweils anderen Umformstufen derselben Blechplatine (1) simuliert werden, und dass derart für mehrere unterschiedliche Abschnitte der Beschneidelinie der Ausgangszustand für jeweils einen dieser Abschnitte jeweils der Blechplatine (1) nach einem unterschiedlichen Umfonnschritt entspricht.

12. Verfahren gemäss einem der Ansprüche 1 bis 2, wobei das Operatorverfahren einen Verlauf einer Nachlaufkante (13) bestimmt, indem eine Tiefziehoperation simuliert wird, wodurch zu jedem einer Menge von materialfesten Punkten auf einer vorgegebenen Linie (8,8') auf der Umformstufe (1) vor dem Tiefziehen ein zugeordneter Punkt auf der Umformstufe (1) nach dem Tiefziehen berechnet wird, und die Gesamtheit dieser zugeordneten Punkte die Nachlaufkante (13,13') beschreibt.

13. Verfahren gemäss einem der Ansprüche 8 bis 11 und Anspruch 12, **dadurch gekennzeichnet, dass** ein Verlauf der Beschneidelinie (3) auf der Umformstufe (1) mit einem Verlauf einer automatisch bestimmten Nachlaufkante (13,13') verglichen wird.

14. Datenverarbeitungssystem zur Bestimmung eines Modells einer Geometrie einer Umformstufe in einem Computer Aided Design (CAD)-System, wobei das Datenverarbeitungssystem Mittel aufweist zur Durchführung des Verfahrens nach einem oder mehreren der Ansprüche 1 bis 13.

15. Computerprogramm zur Bestimmung eines Modells einer Geometrie einer Umformstufe in einem Computer Aided Design (CAD)-System, welches auf einer Datenverarbeitungseinheit ladbar und ausführbar ist, und welches bei der Ausführung das Verfahren nach einem oder mehreren der Ansprüche 1 bis 13 ausführt.

16. Datenträger, enthaltend ein Computerprogramm gemäss Anspruch 15,

**Claims**

1. Method for determining a model of a geometry of a forming stage (1) in a computer-aided design (CAD)-system, comprising the following steps:

   • defining a first geometry object, which comprises a geometry model of the forming stage (1) in a first condition;
   • defining an operator for describing a relation between the first geometry object and a second geometry object, which describes the forming stage in a second condition, wherein the operator associates the two geometry objects to each other and comprises parameters for describing at least one forming step of the forming stage (1); and
   • automatic computation of the second geometry object from the first geometry object by way of carrying out an operator method, which by way of the geometry of the forming stage (1) in the first condition, by way of the parameters of the at least one forming step, and by way of a physical simulation of the at least one forming stage, determines a geometry of the forming stage (1) in the second condition;

   wherein at least two operators are defined in each case with corresponding operator methods, and that the operators are interlinked, which means that a second of the at least two operators is applied to the geometry of the forming stage (1) which is determined by a first of the at least two operators; wherein an operator method in each case computes a trimming line (3) of a forming stage or a subsequent stage in an initial condition before a forming process, from the geometry of the trimming line (3) in a result condition after the forming process, and an operator method comprises the following steps:

   • generating a computation mesh, for describing a geometry of the forming stage in the result condition;
   • initialising condition parameters for a multitude of mesh elements and/or mesh nodes of the forming stage (1) in the result condition;
   • mapping the computation mesh onto a geometry of the forming stage (1) in the initial condition;
   • computing condition parameters changed according to the mapping, in the mapped mesh elements and/or mesh nodes;
   • determining a balanced computation mesh for the initial condition by way of shifting mesh elements or mesh nodes, until element forces of the mesh and external forces are at least approximately in equilibrium;
   • extraction of the trimming line (3) of the forming stage (1) in the initial condition from the balanced computation mesh.

2. Method according to claim 1, wherein the second geometry object is automatically computed or adapted afresh with a change in the parameters for describing at least one forming step.

3. Method according to claim 1 or 2, wherein the condition parameters originate from at least one of the following categories of parameters: stress, extension, cutting forces, hardening or strength, sheet metal thickness.

4. Method according to claim 1 or 2 or 3, wherein the initialisation in the result condition corresponds to a standard condition of the material, in particular to a stress-free and extension-free condition.

5. Method according to one of the claims 1 to 4, wherein an initialisation corresponding to a condition after the deep-drawing, in particular corresponding to a strength and/or a thickness after the deep-drawing is effected before compensating the mesh.

6. Method according to one of the claims 1 to 5, wherein an assessment of the forming ability of the forming stage (1) by the forming process is carried out by way of the balanced computation mesh.

7. Method according to one of the claims 1 to 6, **char-**

acterised in that the forming process is a deep-drawing process, the initial condition describes a sheet metal blank (1) before the deep-drawing, the edge line in the initial condition is an edging (6a) of the sheet metal blank (1), and the result condition describes a draw stage after the deep-drawing.

8. Method according to claim 1, **characterised in that** characteristic properties of the trimming line in the initial condition are automatically determined and assessed, in particular a shear angle and/or a cutting angle and/or cutting bench properties, and that an optimal cutting direction is optionally computed.

9. Method according to claim 8, **characterised in that** a visual display of properties of a complete section of the trimming line (3) is superimposed on a visual display of the forming stage (1).

10. Method according to one of the claims 1 oder 2, wherein the operator method carries out a computation of a trimming line (3) as a second geometry object from an edging of a finished shaped forming stage (1) as a predefined course as a first geometry object, in that a physical simulation is carried out, with which a hypothetical course of the edging is computed from a hypothetical course of the trimming line, and the hypothetical course of the trimming line (3) with a repeated implementation of the physical simulation is automatically and iteratively adapted, until the hypothetical course of the edging has approximated the predefined course up to a predefined tolerance.

11. Method according to claim 10, **characterised in that** several trimming operations are simulated on in each case different forming stages of the same sheet metal blank (1), and that in this manner, for several different sections of the trimming line, the initial condition for in each case one of these sections in each case corresponds to the sheet metal blank (1) after a different forming step.

12. Method according to one of the claims 1 to 2, wherein the operator method determines a course of a trailing edge (13), in that a deep-drawing operation is simulated, by which means an associated point on the forming stage (1) after the deep-drawing is computed for each of a quantity of materially fixed points on a predefined line (8, 8') on the forming stage (1) before the deep-drawing, and the entirety of these associated points describes the trailing edge (13,13').

13. Method according to one of the claims 8 to 11 and claim 12, **characterised in that** a course of the trimming line (3) on the forming stage (1) is compared to a course of an automatically evaluated trailing edge (13, 13').

14. Data processing system for determining a model of a geometry of forming stage in a computer-aided design (CAD)-system, wherein the data processing system comprises means for carrying out the method according to one or more of the claims 1 to 13.

15. Computer program for determining a model of a geometry of a forming stage in a computer-aided design (CAD)-system which may be loaded onto and carried out in a data processing unit, and which on implementation carries out the method according to one or more of the claims 1 to 13.

16. Data carrier comprising a computer program according to claim 15.

**Revendications**

1. Procédé pour déterminer un modèle d'une géométrie d'une ébauche de formage (1) d'une pièce à former en tôle dans un système de conception assistée par ordinateur (CAO), présentant les étapes suivantes :

   - définition d'un premier objet géométrique présentant un modèle de géométrie de l'ébauche de formage (1) dans un premier état ;
   - définition d'un opérateur pour décrire une relation entre le premier objet géométrique et un deuxième objet géométrique, qui décrit un modèle de géométrie de l'ébauche de formage dans un deuxième état, l'opérateur associant les deux objets géométriques l'un à l'autre et présentant des paramètres pour décrire au moins une étape de déformation de l'ébauche de formage (1) ; et
   - calcul automatique du deuxième objet géométrique à partir du premier objet géométrique par exécution d'une procédure associée à l'opérateur, appelée par la suite procédure d'opérateur, qui détermine, à partir de la géométrie de l'ébauche de formage (1) dans le premier état, à l'aide des paramètres de l'au moins une étape de formage, et à l'aide d'une simulation physique de l'au moins une étape de formage, une géométrie de l'ébauche de formage (1) dans le deuxième état ;

   dans lequel au moins deux opérateurs sont définis avec chacun une procédure d'opérateur correspondante, et les opérateurs sont concaténés, c'est-à-dire qu'un deuxième des au moins deux opérateurs est appliqué à la géométrie de l'ébauche de formage (1) déterminée par un premier des au moins deux opérateurs ;
   dans lequel une procédure d'opérateur calcule une ligne de découpe (3) d'une ébauche d'emboutissage profond ou d'une ébauche suivante dans un état initial avant un processus de formage à partir d'une géométrie de la ligne de coupe (3) dans un état résultant après le processus de formage, et une procédure d'opérateur exécute les étapes suivantes :

- génération d'un ensemble de calcul pour décrire une géométrie de l'ébauche de formage (1) dans l'état résultant ;
- initialisation de paramètres d'état pour une pluralité d'éléments de réseau ou de noeuds de réseau de l'ébauche de formage (1) dans l'état résultat ;
- représentation du réseau de calcul sur une géométrie de l'ébauche de formage (1) dans l'état initial ;
- calcul de paramètres d'état modifiés en fonction de la représentation dans les éléments de réseau ou noeuds de réseau représentés;
- détermination d'un réseau de calcul équilibré pour l'état initial par déplacement d'éléments de réseau ou de noeuds de réseau jusqu'à ce que les forces des éléments du réseau et les forces externes se trouvent au moins approximativement à l'équilibre ;
- extraction de la ligne de coupe (3) de l'ébauche de formage (1) dans l'état initial à partir du réseau de calcul équilibré.

**2.** Procédé selon la revendication 1, dans lequel, en cas de modification des paramètres décrivant au moins une étape de formage, le deuxième objet géométrique est automatiquement recalculé ou adapté.

**3.** Procédé selon la revendication 1 ou 2, dans lequel les paramètres d'état proviennent d'au moins une des catégories de paramètres suivantes : tension, allongement, cisaillement, solidification ou solidité, épaisseur de la tôle.

**4.** Procédé selon l'une des revendications 1 ou 2 ou 3, dans lequel l'initialisation dans l'état résultant correspond à un état normalisé du matériau, en particulier à un état sans tension ni allongement.

**5.** Procédé selon l'une des revendications 1 à 4, dans lequel, avant l'équilibrage du réseau, une initialisation est réalisée selon un état consécutif à l'emboutissage profond, en particulier selon une solidité et/ou une épaisseur après l'emboutissage profond.

**6.** Procédé selon l'une des revendications 1 à 5, dans lequel, à l'aide du réseau de calcul équilibré, la déformabilité de l'ébauche de formage (1) par le processus de formage est évaluée.

**7.** Procédé selon l'une des revendications 1 à 6, **caractérisé en ce que** le processus de formage est un processus d'emboutissage profond, l'état initial décrit un flan de tôle (1) avant l'emboutissage profond, la ligne de bord dans l'état initial est une bordure (6a) du flan de tôle (1), et l'état résultant décrit une ébauche d'emboutissage après l'emboutissage profond.

**8.** Procédé selon la revendication 1, **caractérisé en ce que** des propriétés caractéristiques de la ligne de coupe dans l'état initial sont déterminées et évaluées automatiquement, en particulier un angle de cisaillement et/ou un angle de coupe et/ou des propriétés d'un banc de coupe, et **en ce que**, facultativement, un sens de coupe optimal est calculé.

**9.** Procédé selon la revendication 8, **caractérisé en ce qu'**une représentation visuelle de propriétés de tout un tronçon de la ligne de coupe (3) est superposée à une représentation visuelle de l'ébauche de formage (1).

**10.** Procédé selon l'une des revendications 1 ou 2, dans lequel la procédure d'opérateur exécute un calcul d'une ligne de coupe (3) comme deuxième objet géométrique à partir d'une bordure d'une ébauche de formage (1) dont la mise en forme est achevée comme tracé prédéterminé servant de premier objet géométrique, en exécutant une simulation physique dans laquelle, à partir d'un tracé hypothétique de la ligne de coupe, un tracé hypothétique de la bordure est calculé, et le tracé hypothétique de la ligne de coupe (3) est adapté automatiquement de manière itérative par des exécutions répétées de la simulation physique jusqu'à ce que le tracé hypothétique de la bordure soit rapproché du tracé prédéterminé dans les limites d'une tolérance prédéterminée.

**11.** Procédé selon la revendication 10, **caractérisé en ce que** plusieurs opérations de coupe sont simulées sur des ébauches de formage différentes du même flan de tôle (1) et **en ce que** pour plusieurs tronçons différents de la ligne de coupe, l'état initial correspond ainsi pour chacun de ces tronçons au flan de tôle (1) après une étape de formage différente.

**12.** Procédé selon l'une des revendications 1 ou 2, dans lequel la procédure d'opérateur détermine un tracé d'une arête arrière (13) en simulant une opération d'emboutissage profond, de sorte que pour chaque point d'un ensemble de points fixes sur le matériau sur une ligne prédéterminée (8, 8') sur l'ébauche de formage (1) avant l'emboutissage profond, un point correspondant sur l'ébauche de formage (1) après l'emboutissage profond est calculé, et la totalité de ces points associés décrit l'arête arrière (13, 13').

**13.** Procédé selon l'une des revendications 8 à 11 et la revendication 12, **caractérisé en ce qu'**un tracé de la ligne de coupe (3) sur l'ébauche de formage (1) est comparé avec un tracé d'une arête arrière (13, 13) déterminé automatiquement.

**14.** Système de traitement de données pour la détermination d'un modèle d'une géométrie d'une ébauche de formage dans un système de conception assistée par ordinateur (CAO), lequel système de traitement de données possède des moyens pour l'exécution du procédé selon une ou plusieurs des revendications 1 à 13.

**15.** Programme informatique pour la détermination d'un modèle d'une géométrie d'une ébauche de formage dans un système de conception assistée par ordinateur (CAO) qui peut être chargé et exécuté sur une unité de traitement de données et qui exécute lors de son exécution le procédé selon une ou plusieurs des revendications 1 à 13.

**16.** Support de données contenant un programme informatique selon la revendication 15.

**Fig. 1**

Fig. 2

Fig. 3

Fig. 4

Fig. 5

Fig. 6

Fig. 7

Fig. 8

EP 1 665 103 B1

**Fig. 9**

**Fig. 10**

**Fig. 11**

20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20040167097 A1
- EP 0902334 A
- US 5980085 A

### In der Beschreibung aufgeführte Nicht-Patentliteratur

- **S.C. LU et al.** Integration of CAD and FEA for Concurrent Engineering Design of Sheet Stamping. *Trans. American Soc, Mech. Engr., Series B: Journal of Engineering for Industry, ASMA,* 01. August 1996, vol. 118 (3), 310-317